# EUROPEAN PATENT SPECIFICATION

(11) **EP 3 218 432 B1**
(45) Date of publication and mention of the grant of the patent: **28.03.2018**
(21) Application number: 15818037.2
(22) Date of filing: 13.11.2015
(51) Int. Cl.: C08K 3/32, C08K 3/34

(54) **RUBBER COMPOUND TO PRODUCE TYRES**
KAUTSCHUKMISCHUNG ZUR HERSTELLUNG VON REIFEN
COMPOSÉ DE CAOUTCHOUC POUR LA FABRICATION DE PNEUS

(30) Priority: 13.11.2014 IT RM20140666
(43) Date of publication of application: 20.09.2017
(73) Proprietor: Bridgestone Corporation, Tokyo 104-8340 (JP)
(72) Inventor: COSSU, Giancarlo, I-00135 Roma (IT); PALUMBI, Maria Cecilia, I-00128 Roma (IT); CALIANO, Ludovica, I-00128 Roma (IT)
(74) Representative: Marchetti, Alessio
(86) International application number: PCT/IB2015/058786
(87) International publication number: WO 2016/075667

(56) References cited:
- GB-A- 1 164 680
- US-A1- 2007 265 374

## Description

### TECHNICAL FIELD

The present invention relates to a rubber compound for tyres.

### BACKGROUND ART

Recently, one of the main research areas in the field of tyres concerns a possible substitution of zinc oxide (ZnO) as the vulcanization activator.

Due to its possible environmental implications, there is a requirement for the use of ZnO to be limited. Obviously, an excessive limitation of the ZnO, although on the one hand it would meet the environmental requirements, on the other may compromise the vulcanization of the compound with negative consequences in terms of physical and/or dynamic characteristics of the resulting compounds.

The need was therefore felt for an alternative to the use of ZnO in rubber compounds, which meets the environmental requirements without compromising the physical and/or dynamic characteristics of the compounds.

It has been found that the use of certain zinc salts allows the overall quantity of zinc in the compound to be significantly reduced.

US2007265374 discloses a composition which contains at least one diene rubber or at least one copolymer of a diene rubber and/or mixtures and zinc hydroxide and/or basic zinc carbonate and/or zinc phosphate. The composition is suitable as a masterbatch and can be employed for the preparation of vulcanizable mixtures with a lower zinc load.

GB1164680 discloses a transparent vulcanized composition comprising natural or synthetic rubber and a synthetic phosphate of an alkaline earth metal, zinc, or aluminium having a particle size of 0.01 to 100 µ, and a surface area in the range of 10 m²/g to 200 m²/g (BET).

### DISCLOSURE OF INVENTION

The subject of the present invention is a rubber compound comprising a polymer base with cross-linkable unsaturated chain, a filler and a vulcanization system; said vulcanization system comprising at least sulphur, one or more vulcanization accelerators and one or more vulcanization activators; said compound being characterized in that said vulcanization system comprises a vulcanization activator consisting of Zn₂SiO₄.

Here and below, the term "polymer base with cross-linkable unsaturated chain" means any natural or synthetic non crosslinked polymer able to take on all the chemical-physical and mechanical characteristics typically taken on by the elastomers following cross-linking (vulcanization) with sulphur-based systems.

Preferably, said vulcanization activator consisting of Zn₂SiO₄ is present in the compound in a quantity ranging from 0.01 to 2.5 phr, more preferably from 0.01 to 1.5 phr.

Preferably, the vulcanization activator consisting of zn₂SiO₄ is the only vulcanization activator in said vulcanization system.

Preferably, Zn₂SiO₄ represents the only source of Zn in the compound.

A further subject of the present invention is a tyre portion produced with the compound subject of the present invention.

A further subject of the present invention is a tyre comprising a portion produced with a compound subject of the present invention.

A further subject of the present invention is the use of Zn₂SiO₄ as a vulcanization activator in rubber compounds.

### BEST MODE FOR CARRYING OUT THE INVENTION

Examples are given below for illustrative non-limiting purposes for a better understanding of the present invention.

### EXAMPLES

### - Vulcanization tests -

To test the capacities of Zn₂SiO₄ as a vulcanization activator compared to ZnO, an experimental method was formulated based on the vulcanization reaction of a model molecule in the presence of a vulcanization system comprising alternatively ZnO or Zn₂SiO₄ and squalene as a molecule representative of the polymer base. Occurrence of the vulcanization was monitored by means of the HPLC analysis technique.

Tables I-V show the compositions in phr of the 10 reaction mixtures (A-J) used for the vulcanization tests.

**TABLE I**

| | A | B |
|---|---|---|
| Squalene | 100 | |
| CBS | 1.2 | |
| Sulphur | 2 | |
| Stearic acid | 2 | |
| ZnO | 0.5 | -- |
| Zn₂SiO₄ | -- | 0.5 |

**TABLE II**

| | C | D |
|---|---|---|
| Squalene | 100 | |
| CBS | 1.2 | |
| Sulphur | 2 | |
| Stearic acid | 2 | |
| ZnO | 1.5 | -- |
| Zn₂SiO₄ | -- | 1.5 |

**TABLE III**

| | E | F |
|---|---|---|
| Squalene | 100 | |
| CBS | 1.2 | |
| Sulphur | 2 | |
| Stearic acid | 2 | |
| ZnO | 2.5 | -- |
| Zn₂SiO₄ | -- | 2.5 |

**TABLE IV**

| | G | H |
|---|---|---|
| Squalene | 100 | |
| CBS | 1.2 | |
| Sulphur | 2 | |
| Stearic acid | 2 | |
| ZnO | 3.0 | -- |
| Zn₂SiO₄ | -- | 3.0 |

**TABLE V**

| | I | J |
|---|---|---|
| Squalene | 100 | |
| CBS | 1.2 | |
| Sulphur | 2 | |
| Stearic acid | 2 | |
| ZnO | 5.0 | -- |
| Zn₂SiO₄ | -- | 5.0 |

For each of the above reaction mixtures, the degree of vulcanization of the squalene was determined by the HPLC analysis technique referring to the chromatographic signals typical of the cross-linking products. The results are reported in Tables VI and VII in an indexed form with respect to the value found for the compounds with ZnO at the same concentration of phr (0.5; 1.5; 2.5; 3.0; 5.0).

**TABLE VI**

| | A | B | C | D | E | F |
|---|---|---|---|---|---|---|
| Vulcanization index | 100 | 333 | 100 | 250 | 100 | 167 |
| Moles of Zn | 0.006 | 0.004 | 0.018 | 0.013 | 0.031 | 0.022 |

**TABLE VII**

| | G | H | I | J |
|---|---|---|---|---|
| Vulcanization index | 100 | 50 | 100 | 63 |
| Moles of Zn | 0.037 | 0.027 | 0.061 | 0.045 |

From the values of Tables VI and VII it is clear that Zn₂SiO₄ at low concentrations has an effectiveness in terms of vulcanization activation significantly higher than that of the ZnO.

In particular, from the values of Tables VI and VII it can be seen that Zn₂SiO₄ is more effective than the ZnO when used in concentrations below 3 phr (values of Table VI), while it is less effective than the ZnO when used in concentrations above 3 phr (values of Table VII).

For a better understanding of the advantages of the present invention, Tables VI and VII also show the number of moles of Zn present in each of the compounds A - J. In said regard, the values of Tables VI and VII show that it is possible to drastically reduce the presence of Zn in the compound while maintaining the vulcanization capacities of the compound unchanged.

In fact, the possibility of obtaining a high degree of vulcanization using low quantities of Zn₂SiO₄ is necessarily reflected in a significant reduction of the overall quantity of Zn in the compound.

## Claims

1. A rubber compound comprising a polymer base with a cross-linkable unsaturated chain, a filler, and a vulcanization system; said vulcanization system comprising at least sulphur, one or more vulcanization accelerators, and one or more vulcanization activators; said compound being **characterized in that** said vulcanization system comprises a vulcanization activator consisting of Zn₂SiO₄.

2. A rubber compound according to claim 1, **characterized in that** said vulcanization activator consisting of Zn₂SiO₄ is present in the compound in a quantity ranging from 0.01 to 2.5 phr.

3. A rubber compound according to claim 1, **characterized in that** said vulcanization activator consisting of Zn₂SiO₄ is present in the compound in a quantity ranging from 0.01 to 1.5 phr.

4. A rubber compound according to one of the previous claims, **characterized in that** said vulcanization activator consisting of Zn₂SiO₄ is the only vulcanization activator in said vulcanization system.

5. A rubber compound according to one of the previous claims, **characterized in that** Zn₂SiO₄ is the only source of Zn in the compound.

6. A tyre portion manufactured with a compound according to one of the previous claims.

7. A tyre comprising a portion according to claim 6.

8. A use of Zn₂SiO₄ as a vulcanization activator in rubber compounds.

9. A use according to claim 8, **characterized in that** said vulcanization activator consisting of Zn₂SiO₄ is present in the compound in a quantity ranging from 0.01 to 2.5 phr.

10. A use according to claim 8, **characterized in that** said vulcanization activator consisting of Zn₂SiO₄ is present in the compound in a quantity ranging from 0.01 to 1.5 phr.

## Patentansprüche

1. Gummimischung, umfassend eine Polymerbasis mit einer vernetzbaren ungesättigten Kette, einen Füllstoff und ein Vulkanisierungssystem; wobei das Vulkanisierungssystem mindestens Schwefel, einen oder mehrere Vulkanisierungsbeschleuniger und einen oder mehrere Vulkanisierungsaktivatoren umfasst; wobei die Mischung **dadurch gekennzeichnet ist, dass** das Vulkanisierungssystem einen Vulkanisierungsaktivator umfasst, bestehend aus Zn₂SiO₄.

2. Gummimischung nach Anspruch 1, **dadurch gekennzeichnet, dass** der Vulkanisierungsaktivator bestehend aus Zn₂SiO₄ in der Mischung in einer Menge im Bereich von 0,01 bis 2,5 phr vorliegt.

3. Gummimischung nach Anspruch 1, **dadurch gekennzeichnet, dass** der Vulkanisierungsaktivator bestehend aus Zn₂SiO₄ in der Mischung in einer Menge im Bereich von 0,01 bis 1,5 phr vorliegt.

4. Gummimischung nach einem der vorstehenden Ansprüche, **dadurch gekennzeichnet, dass** der Vulkanisierungsaktivator bestehend aus Zn₂SiO₄ der einzige Vulkanisierungsaktivator in dem Vulkanisierungssystem ist.

5. Gummimischung nach einem der vorstehenden Ansprüche, **dadurch gekennzeichnet, dass** Zn₂SiO₄ die einzige Zn-Quelle in der Mischung ist.

6. Reifenabschnitt, gefertigt mit einer Mischung nach einem der vorstehenden Ansprüche.

7. Reifen, umfassend einen Abschnitt nach Anspruch 6.

8. Verwendung von Zn₂SiO₄ als ein Vulkanisierungsaktivator in Gummimischungen.

9. Verwendung nach Anspruch 8, **dadurch gekennzeichnet, dass** der Vulkanisierungsaktivator bestehend aus Zn₂SiO₄ in der Mischung in einer Menge im Bereich von 0,01 bis 2,5 phr vorliegt.

10. Verwendung nach Anspruch 8, **dadurch gekennzeichnet, dass** der Vulkanisierungsaktivator bestehend aus Zn₂SiO₄ in der Mischung in einer Menge im Bereich von 0,01 bis 1,5 phr vorliegt.

## Revendications

1. Composé de caoutchouc comprenant une base polymère avec une chaîne insaturée réticulable, une charge et un système de vulcanisation ; ledit système de vulcanisation comprenant au moins du soufre, un ou plusieurs accélérateurs de vulcanisation et un ou plusieurs activateurs de vulcanisation ; ledit composé **étant caractérisé en ce que** ledit système de vulcanisation comprend un activateur de vulcanisation constitué de Zn₂SiO₄.

2. Composé de caoutchouc selon la revendication 1, **caractérisé en ce que** ledit activateur de vulcanisation constitué de Zn₂SiO₄ est présent dans le composé en une quantité allant de 0,01 à 2,5 pcc.

3. Composé de caoutchouc selon la revendication 1, **caractérisé en ce que** ledit activateur de vulcanisation constitué de Zn₂SiO₄ est présent dans le composé en une quantité allant de 0,01 à 1,5 pcc.

4. Composé de caoutchouc selon l'une des revendications précédentes, **caractérisé en ce que** ledit activateur de vulcanisation constitué de Zn₂SiO₄ est le seul activateur de vulcanisation dans ledit système de vulcanisation.

5. Composé de caoutchouc selon l'une des revendications précédentes, **caractérisé en ce que** Zn₂SiO₄ est la seule source de Zn dans le composé.

6. Partie de pneumatique fabriquée avec un composé selon l'une des revendications précédentes.

7. Pneumatique comprenant une partie selon la revendication 6.

8. Utilisation de Zn₂SiO₄ en tant qu'activateur de vulcanisation dans des composés de caoutchouc.

9. Utilisation selon la revendication 8, **caractérisée en ce que** ledit activateur de vulcanisation constitué de Zn₂SiO₄ est présent dans le composé en une quantité allant de 0,01 à 2,5 pcc.

10. Utilisation selon la revendication 8, **caractérisée en ce que** ledit activateur de vulcanisation constitué de Zn₂SiO₄ est présent dans le composé en une quantité allant de 0,01 à 1,5 pcc.
